# EUROPÄISCHE PATENTSCHRIFT

(11) **EP 2 140 769 B1**
(45) Veröffentlichungstag und Bekanntmachung des Hinweises auf die Patenterteilung: **08.02.2012**
(21) Anmeldenummer: 09008422.9
(22) Anmeldetag: 27.06.2009
(51) Int. Cl.: A23L 1/00, A23P 1/08

(54) **Beschichtungsvorrichtung**
Coating device
Dispositif de revêtement

(30) Priorität: 01.07.2008 DE 202008008917 U
(43) Veröffentlichungstag der Anmeldung: 06.01.2010
(73) Patentinhaber: Schneider, Henrik, 33659 Bielefeld (DE)
(72) Erfinder: Schneider, Henrik, 33659 Bielefeld (DE)
(74) Vertreter: Schober, Mirko

(56) Entgegenhaltungen:
- EP-A- 0 217 409
- WO-A-2004/019708
- DE-A1- 3 135 493
- GB-A- 746 101
- GB-A- 2 406 808
- US-A- 3 045 640
- US-A- 4 419 953

## Beschreibung

Die Erfindung betrifft eine Beschichtungsvorrichtung nach dem Oberbegriff des Anspruchs 1.

Entsprechende Vorrichtungen werden im Bereich der Lebensmittelindustrie eingesetzt, um Lebensmittel mit einem Beschichtungsmaterial wie z.B. Paniermehl zu versehen. Dazu werden die zu beschichtenden Produkte durch ein Mehlbett geführt, indem sie auf ein mit Mehl beschicktes Förderband geleitet werden und die Beschichtung infolge des Wälzens im Mehlbett und des Eigengewichts der zu beschichtenden Produkte an diesen haften bleibt. Insbesondere wird dabei mindestens ein Förderband oberhalb des zu beschichtenden Produktes vorgesehen, welches das Mehl befördert. Am Ende des Förderbandes fällt das Mehl auf das zu beschichtende Produkt herab und haftet daran.

Aufgrund des Eigengewichts der Produkte kommt es dazu, dass das Mehl bei schwereren Produkten besser haftet als bei vergleichsweise leichten Produkten. Die zu erreichende Dicke der Beschichtung wird also nicht nur von der vorgehaltenen Mehlmenge bestimmt, sondern vor allem nicht unabhängig vom Eigengewicht.

Aus der US-4,419,953 und der US-3,045,640 sind Beschichtungsvorrichtungen bekannt, bei welchen Gebläse dazu genutzt werden Beschichtungsmittel und auf die Unterseite der Lebensmittel zu blasen.

Aufgabe der vorliegenden Erfindung ist es daher, eine Beschichtungsvorrichtung der eingangs genannten Art anzugeben, mit welcher sich eine gleichmäßige Beschichtung der zu beschichtenden Gegenstände unabhängig von der Größe bzw. dem Gewicht derselben erreichen lässt.

Gelöst wird diese Aufgabe mit den Merkmalen des Anspruchs 1, vorteilhafte Ausführungsformen finden sich in den Unteransprüchen.

Erfindungsgemäß ist wenigstens eine Strömungseinrichtung vorgesehen, mit der das Beschichtungsmaterial in Strömung versetzt und das zu beschichtende Produkt angeströmt bzw. umströmt wird. Die tatsächlich auf dem Produkt aufgebrachte Menge wird somit allein durch die vorgehaltene Menge an Beschichtungsmaterial erreicht, das Eigengewicht des Produkts spielt für die Beschichtungsmenge keine Rolle. Bevorzugt ist eine weitere, der ersten Strömungseinrichtung entgegengesetzte Strömungseinrichtung vorgesehen, sodass das zu beschichtende Produkt auch von der gegenüberliegenden Seite angeströmt und umströmt werden kann und eine homogene Beschichtungsstärke erreicht wird. Zur Verteilung des Beschichtungsmaterials sind bevorzugt ausgangs der Strömungseirichtungen Verteilerelemente vorgesehen, die insbesondere in Form von Strömungsplatten mit einer Mehrzahl Austrittsöffnungen vorgesehen sind.

Die Erfindung und ihre vorteilhaften Ausführungsformen werden nachfolgend anhand der Zeichenfiguren 1 bis 5 schematisch näher erläutert.
- Figur 1 -: zeigt das Schema einer ersten Ausführungs- form der Erfindung,
- Figur 2 -: zeigt das Schema einer zweiten Ausführungs- form der Erfindung,
- Figuren 3 (A) bis 3(C) -: zeigen weitere Ausführungsvarianten der Transporteinrichtung in der erfindungsgemä- ßen Vorrichtung,
- Figuren 4 und 5 -: zeigen Ausführungsbeispiele für die in der erfindungsgemäßen Vorrichtung verwendeten Verteilerelemente.

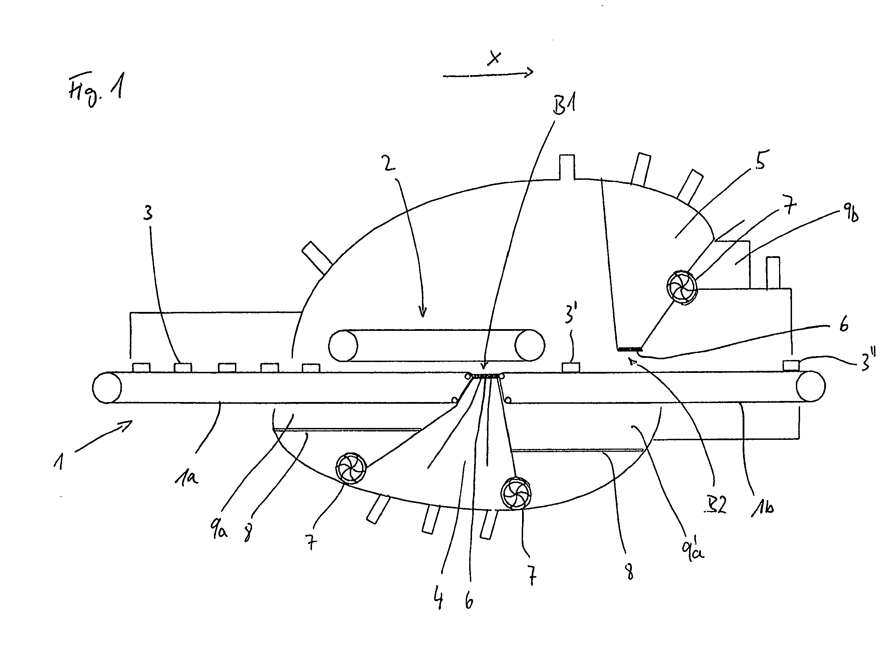

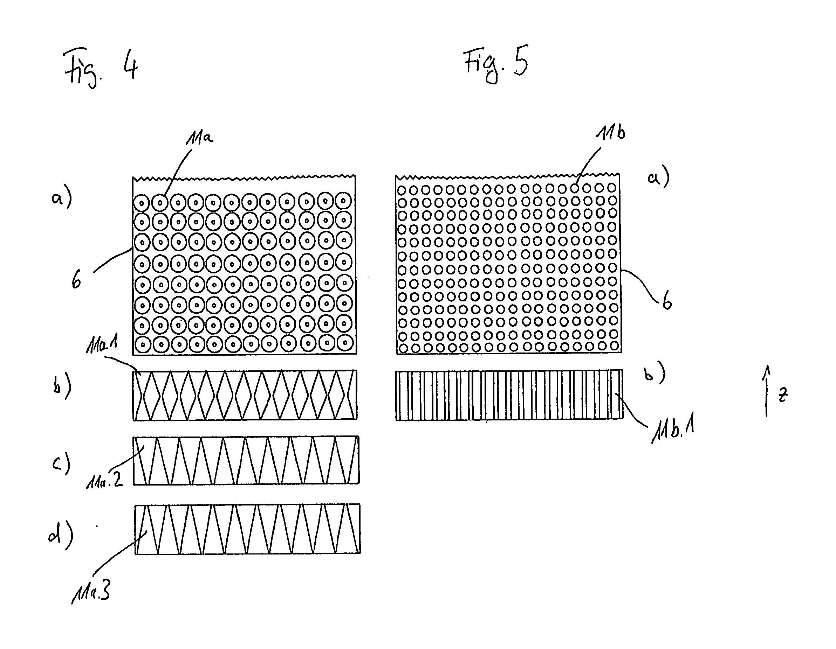

Die in Figur 1 schematisch dargestellte Beschichtungsvorrichtung weist eine Transporteinrichtung 1 zum Vorschub der zu beschichtenden Produkte 2 in Transportrichtung x auf. Im gezeigten Beispiel weist die Transporteinrichtung 1 ein erstes Zuführförderband 1a auf, auf welchem die zu beschichtenden Gegenstände 3 zu einem (ersten) Beschichtungsbereich B1 befördert werden. Der Beschichtungsbereich B1 ist jenseits eines Verteilerelements 6 angeordnet, welches sich im Endbereich einer Strömungseinrichtung 4 befindet. Das weiter unten mit Bezug auf die Figuren 4 und 5 beschriebene Verteilerelement 6 ist so ausgelegt, dass es eine auf dieses treffende Strömung, die Beschichtungsmaterial enthält, im Beschichtungsbereich verteilt, sodass das zu beschichtende Produkt 3 mit Beschichtungsmaterial angeströmt oder/und umströmt wird.

Das Beschichtungsmaterial wird im gezeigten Beispiel in einem (ersten) Reservoir 9a vorgehalten und über Zuführeinrichtungen 7 je nach gewünschter Menge der Strömungseinrichtung 4 zugeführt. Die Strömungseinrichtung 4 erzeugt bevorzugt eine Luftströmung, welche das zugeführte Beschichtungsmaterial mitreißt und in Richtung auf und durch das Verteilerelement 6 in den Beschichtungsbereich B1 strömen lässt. Bevorzugt verjüngt sich der Kanal der Strömungseinrichtung 4 (auch der der Strömungseinrichtung 5) in Strömungsrichtung (zum jeweiligen Beschichtungsbereich B1, B2) hin. Befindet sich ein zu beschichtendes Produkt 3 im Beschichtungsbereich B1, d.h. im gezeigten Beispiel über dem Verteilerelement 6, so wird dieses mit Beschichtungsmaterial angeströmt oder/und umströmt und so beschichtet. Im gezeigten Beispiel ist wenigstens in der Umgebung des Beschichtungsbereichs B1 eine bevorzugt als umlaufendes Band ausgebildete Gegenhalteeinrichtung 2 vorgesehen, die - wenn das zu beschichtende Produkt 3 von der Strömungseinrichtung 4 angeströmt und dadurch angehoben wird - das Produkt 3 an einer Weiterbewegung in Strömungsrichtung hindert und das Produkt 3 insbesondere während des Anströmens über dem Verteilerelement 6 hält.

Die als Förderband ausgebildete Gegenhalteeinrichtung 2 ist bevorzugt mit dem Vorschub der Transporteinrichtung 1 abgestimmt.

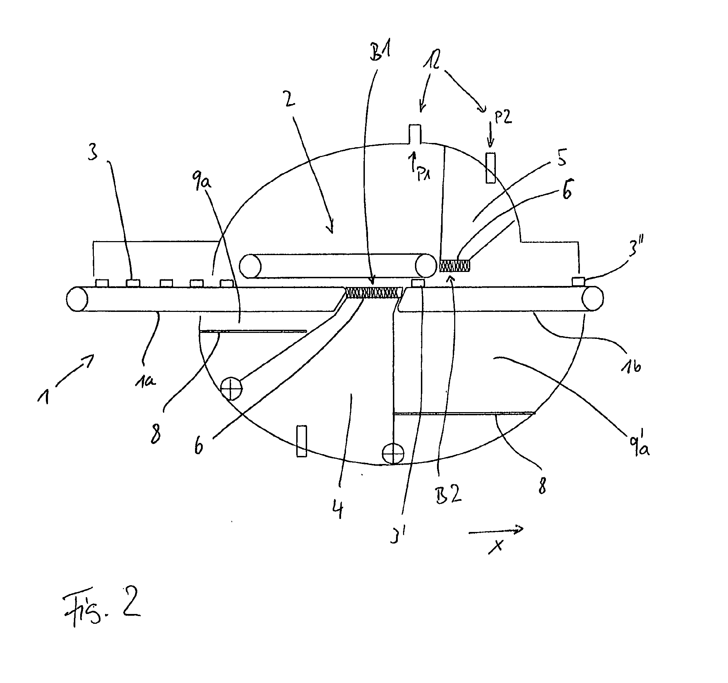

Das auf dem Zuführförderband 1a zugeführte Produkt 3 wird dem Beschichtungsbereich B1 zugeführt und dort mit Beschichtungsmaterial angeströmt bzw. umströmt und dabei gegen das Band 2 der Gegenhalteeinrichtung 2 gedrückt, welche ihrerseits in Transportrichtung x vorgeschoben wird und das (teil-) beschichtete Produkt 3' auf ein weiteres Förderband 1b führt. Das weitere Förderband 1b wird ebenfalls in Transportrichtung x vorgeschoben und führt das (teil-) beschichtete Produkt 3' zu einem (zweiten) Beschichtungsbereich B2, welcher durch eine (zweite) Strömungseinrichtung 5 angeströmt wird, welche ebenfalls ein Verteilerelement 6 im Endbereich aufweist und ansonsten genauso arbeitet wie die erste Strömungseinrichtung 4. Im Unterschied zur ersten Strömungseinrichtung 4 ist die zweite Strömungseinrichtung 5 etwa mit entgegengesetzter Strömungsrichtung ausgebildet, so dass das Produkt 3' im Beschichtungsbereich B2 von oben (und nicht wie im Bereich B1 von unten) angeströmt bzw. umströmt wird. Im gezeigten Beispiel wird die zweite Strömungseinrichtung aus einem zweiten Reservoir 9b mit Beschichtungsmaterial über eine Zuführeinrichtung 7 beschickt. Alternativ ist es möglich, eine Rückführeinrichtung (vgl. Pos. 12 in Figur 2) vorzusehen, um aus der ersten Strömungseinrichtung 4 ausgeblasenes, überschüssiges Beschichtungsmaterial abzusaugen (Pfeil P1 in Figur 2) und der zweiten Strömungseinrichtung 5 (Pfeil P2 in Figur 2) zuzuführen. Aus der zweiten Strömungseinrichtung 5 ausgeblasenes Material fällt in das Reservoir 9a' zurück, welches daher bevorzugt unterhalb der zweiten Strömungseinrichtung 5 vorgesehen ist und zur Beschickung der ersten Strömungseinrichtung 4 verwendet werden kann. Die Reservoire 9a und 9a' weisen bevorzugt eine Auffangeinrichtung 8 auf, die zu große Partikel herausfiltert.

Nach dem An- bzw. Umströmen des (teil-) beschichteten Produkts 3' ist dieses allseitig beschichtet und wird vom Förderband 3" zur weiteren Bearbeitung und Konfektionierung abtransportiert.

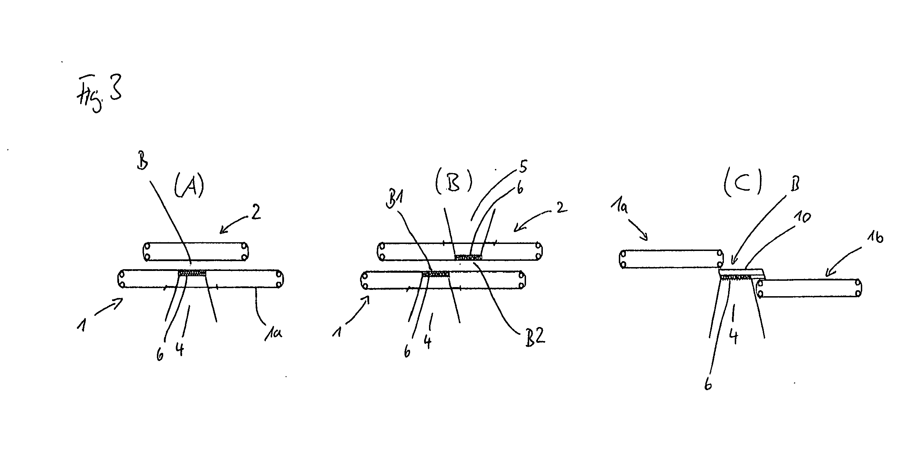

Das Verteilerelement 6 kann, wie in Figur 3(A) gezeigt, auch Teil der Transporteinrichtung 1 sein, indem es beispielsweise in das Förderband 1a integriert ist (das Förderband 1a ist hierzu bevorzugt porös ausgebildet, so dass das Beschichtungsmaterial hindurchtreten kann). Die zu beschichtenden Produkte werden dann auf dem Verteilerelement 6 abgelegt und in den Bereich B1 oberhalb der Strömungseinrichtung 4 gefahren. Entsprechend ist dies auch mit einem weiteren Verteilerelement 6 in der Gegenhalteeinrichtung 2 denkbar, wie es in Figur 3(B) gezeigt ist.

Alternativ kann - wie in Figur 3(C) gezeigt - zwischen den beiden Förderbändern 1a und 1b eine Rüttelplatte 10 im Beschichtungsbereich B vorgesehen sein. Die zu beschichtenden Produkte gelangen auf die Rüttelplatte und werden im Bereich B über die Strömungseinrichtung 4 und das Verteilerelement 6 angeströmt. Während des Anströmvorganges wird die Rüttelplatte bewegt, sodass sich das Produkt auf der Rüttelplatte wendet und so von allen Seiten angeströmt und damit beschichtet wird und über das Förderband 1b im beschichteten Zustand abtransportiert werden kann. Bei dieser Variante ist eine weitere Strömungseinrichtung nicht erforderlich.

In den Figuren 4 und 5 sind beispielhaft mögliche Ausgestaltungen des Verteilerelements 6 dargestellt, welches bevorzugt in Form einer Verteilerplatte ausgebildet ist. Bevorzugt enthält das Verteilerelement 4 eine regelmäßige oder auch unregelmäßige Anordnung von Löchern bzw. Austrittsöffnungen 11a, 11b Diese können entweder aus Bohrungen bestehen, welche durch ihren gesamten Längsverlauf (in Richtung z) einen konstanten Querschnitt aufweisen (vgl. Öffnungen 11b.1 in Figur 5b) oder es können sich aufweitende oder verjüngende Öffnungen vorgesehen sein, wie es in Figur 4a bis 4c gezeigt ist.

Möglich sind unter anderem Öffnungen mit einem in Längsrichtung z gesehen konischen (11a.2, 11a.3) oder doppelkonischen Verlauf (11a.1). Die Form der Öffnungen kann auch anders ausgebildet sein, je nachdem, welche Ausströmeingenschaften das Verteilerelement 6 aufweisen soll. Insbesondere kann die Form je nach Wahl des verwendeten Beschichtungsmaterials variieren.

## Patentansprüche

1. Beschichtungsvorrichtung, zum Beschichten von Gegenständen (3), insbesondere Lebensmittelprodukten, mit einem Beschichtungsmaterial, mit einer Transporteinrichtung (1) zum Transportieren der zu beschichtenden Gegenstände (3) in einer Transportrichtung (x) durch die Beschichtungsvorrichtung,
wobei wenigstens eine Strömungseinrichtung (4, 5) vorgesehen ist, welche dazu ausgelegt ist, das Beschichtungsmaterial einem Beschichtungsbereich (B, B1, B2) zuzuleiten, welcher im Bereich des Transportweges der Transporteinrichtung (1) vorgesehen oder Teil der Transporteinrichtung (1) ist, **dadurch gekennzeichnet, dass** wenigstens im Beschichtungsbereich (B, B1, B2) eine der Transporteinrichtung (1) gegenüberliegende Gegenhaltevorrichtung (2) zum Begrenzen einer Bewegung der von der Strömungseinrichtung (4, 5) angeströmten, zu beschichtenden Gegenstände (3) in Strömungsrichtung vorgesehen ist.

2. Beschichtungsvorrichtung nach Anspruch 1,
**dadurch gekennzeichnet,**
**dass** die Strömungseinrichtung (4, 5) im in Strömungsrichtung gelegenen Endbereich ein Verteilerelement (6) zur Verteilung des zugeleiteten Beschichtungsmaterials im Beschichtungsbereich (B, B1, B2) aufweist.

3. Beschichtungsvorrichtung nach einem der vorherigen Ansprüche,
**dadurch gekennzeichnet,**
**dass** das Verteilerelement (6) eine Verteilerplatte mit einer Mehrzahl Austrittsöffnungen (11a, 11b) ist.

4. Beschichtungsvorrichtung nach Anspruch 3,
**dadurch gekennzeichnet,**
**dass** die Austrittsöffnungen (11a) wenigstens eine sich in Strömungsrichtung verjüngende (11a.1, 11a.3) oder/ und aufweitende Form (11a.1, 11a.2) aufweisen.

5. Beschichtungsvorrichtung nach einem der vorherigen Ansprüche,
**dadurch gekennzeichnet,**
**dass** eine erste Strömungseinrichtung (4) und eine in Transportrichtung (x) stromabwärts gelegene weitere Strömungseinrichtung (5) vorgesehen ist.

6. Beschichtungsvorrichtung nach Anspruch 5,
**dadurch gekennzeichnet,**
**dass** die zweite Strömungseinrichtung (5) eine der ersten Strömungseinrichtung (4) etwa entgegengesetzte Strömungsrichtung aufweist.

7. Beschichtungsvorrichtung nach einem der vorherigen Ansprüche,
**dadurch gekennzeichnet,**
**dass** wenigstens ein Reservoir (9a, 9a', 9b) zur Bevorratung von Beschichtungsmaterial vorgesehen ist.

8. Beschichtungsvorrichtung nach einem der vorherigen Ansprüche,
**dadurch gekennzeichnet,**
**dass** im Beschichtungsbereich (B) eine Rüttelplatte (10) vorgesehen ist.

9. Beschichtungseinrichtung nach einem der vorherigen Ansprüche,
**dadurch gekennzeichnet,**
**dass** eine Rückführeinrichtung (12) vorgesehen ist, die durch die Strömungseinrichtung (4, 5) ausgeströmtes überschüssiges Beschichtungsmaterial in die Strömungseinrichtung (4, 5) zurückführt.

## Claims

1. Coating device, for coating objects (3), more particularly food products, with a coating material, comprising a transport system (1) for transporting the objects (3) which are to be coated in a transport direction (x) through the coating device,
wherein at least one flow mechanism (4, 5) is provided which is designed to feed the coating material in a coating area (B, B1, B2) which is provided in the area of the transport path of the transport system (1) or is part of the transport system (1), **characterised in that** at least in the coating area (B, B1, B2) a counter holding device (2) is provided opposite the transport system (1) to restrict movement in the flow direction of the objects (3) which are to be coated and which have been moved along by the flow mechanism (4, 5).

2. Coating device according to claim 1 **characterised in that** the flow mechanism (4, 5) has in the end area placed in the flow direction a distributor element (6) for distributing the supplied coating material in the coating area (B, B1, B2).

3. Coating device according to one of the preceding claims **characterised in that** the distributor element (6) is a distributor plate with a number of outlet openings (11a, 11b).

4. Coating device according to claim 3 **characterised in that** the outlet openings (11a) have at least one shape which tapers (11a.1, 11 a.2) and/or widens out (11a.1, 11 a.2) in the flow direction.

5. Coating device according to one of the preceding claims **characterised in that** a first flow mechanism (4) is provided and a further flow mechanism (5) placed downstream in the transport direction (x)..

6. Coating device according to claim 5 **characterised in that** the second flow mechanism (5) has a flow direction set roughly opposite the first flow mechanism (4).

7. Coating device according to one of the preceding claims **characterised in that** at least one reservoir (9a, 9a', 9b) is provided for supplying the coating material.

8. Coating device according to one of the preceding claims **characterised in that** a vibrator plate (10) is provided in the coating area (B).

9. Coating device according to one of the preceding claims **characterised in that** a return mechanism (12) is provided which returns excess coating material flowing out through the flow mechanism (4, 5) back into the flow mechanism (4, 5).

## Revendications

1. Dispositif de revêtement pour revêtir des objets (3), en particulier des produits alimentaires, avec une matière de revêtement, lequel comprend une installation de transport pour transporter les objets à revêtir (3) à travers le dispositif de revêtement, dans une direction de transport (x), sachant qu'est prévue au moins une installation de formation d'un flux d'écoulement (4, 5), qui est conçue pour amener la matière de revêtement à une zone de revêtement (B, B1, B2), qui est prévue dans le secteur de la voie de transport de l'installation de transport (1) ou fait partie de l'installation de transport (1),
**caractérisé en ce que**, dans la zone de revêtement (B, B1, B2) au moins, est prévu un dispositif de contre-maintien (2), qui, situé à l'opposé de l'installation de transport (1), est destiné à limiter un mouvement des objets à revêtir (3), soumis au flux de l'installation de formation d'un flux d'écoulement (4, 5).

2. Dispositif de revêtement selon la revendication 1,
**caractérisé en ce que** l'installation de formation d'un flux d'écoulement (4, 5) présente, dans la région d'extrémité située dans la direction d'écoulement, un élément de répartition (6), qui est destiné à répartir la matière de revêtement dans la zone de revêtement (B, B1, B2).

3. Dispositif de revêtement selon l'une des revendications précédentes,
**caractérisé en ce que** l'élément de répartition (6) est une plaque de répartition avec une pluralité d'ouvertures de sortie (11a, 11b).

4. Dispositif de revêtement selon la revendication 3,
**caractérisé en ce que** les ouvertures de sortie (11a) présentent au moins une forme, qui s'amincit (11a.1, 11a.3) ou /et s'élargit (11a.1, 11a.2) dans la direction d'écoulement.

5. Dispositif de revêtement selon l'une des revendications précédentes,
**caractérisé en ce que** sont prévues une première installation de formation d'un flux d'écoulement (4) et une autre installation de formation d'un flux d'écoulement (5), qui est située en aval dans la direction de transport (x).

6. Dispositif de revêtement selon la revendication 5,
**caractérisé en ce que** la deuxième installation de formation d'un flux d'écoulement (5) présente une direction d'écoulement légèrement opposée à la première installation de formation d'un flux d'écoulement (4).

7. Dispositif de revêtement selon l'une des revendications précédentes,
**caractérisé en ce qu'**au moins un réservoir (9a, 9a', 9b) est prévu pour le stockage de matière de revêtement.

8. Dispositif de revêtement selon l'une des revendications précédentes,
**caractérisé en ce qu'**une plaque vibrante (10) est prévue dans la zone de revêtement (B).

9. Dispositif de revêtement selon l'une des revendications précédentes,
**caractérisé en ce qu'**est prévue un dispositif de remise en circulation (12), qui reconduit à l'installation de formation d'un flux d'écoulement (4, 5) la matière de revêtement excédentaire, délivrée par ladite installation de formation d'un flux d'écoulement (4, 5).
